# EUROPÄISCHE PATENTSCHRIFT

(11) **EP 3 934 073 B1**
(45) Veröffentlichungstag und Bekanntmachung des Hinweises auf die Patenterteilung: **28.05.2025**
(21) Anmeldenummer: 21020317.0
(22) Anmeldetag: 16.06.2021
(51) Int. Cl.: H02M 1/00, H02M 7/483

(54) **VERFAHREN UND SYSTEM ZU EINER VORAUSWAHL VON SCHALTZUSTÄNDEN FÜR EINEN MULTILEVELKONVERTER**
METHOD AND SYSTEM FOR PRESELECTION OF SWITCHING STATES FOR A MULTILEVEL CONVERTER
PROCÉDÉ ET SYSTÈME DE PRÉSÉLECTION DES ÉTATS DE COMMUTATION POUR UN CONVERTISSEUR À NIVEAUX MULTIPLES

(30) Priorität: 01.07.2020 DE 102020117264
(43) Veröffentlichungstag der Anmeldung: 05.01.2022
(73) Patentinhaber: Dr. Ing. h.c. F. Porsche AG, 70435 Stuttgart (DE)
(72) Erfinder: Kacetl, Tomas, 67657 Kaiserslautern (DE); Kacetl, Jan, 67657 Kaiserslautern (DE); Götz, Stefan, 85659 Forstern (DE); Simon, Daniel, 71638 Ludwigsburg (DE); Jaensch, Malte, 74321 Bietigheim-Bissingen (DE); Specht, Eduard, 76646 Bruchsal (DE); Dibos, Hermann Helmut, 75196 Remchingen (DE); Weyland, Axel, 70563 Stuttgart (DE)

(56) Entgegenhaltungen:
- DE-B3- 102018 125 728
- LI ZHONGXI ET AL: "Predictive control of modular multilevel series/parallel converter for battery systems", 2017 IEEE ENERGY CONVERSION CONGRESS AND EXPOSITION (ECCE), IEEE, 1 October 2017 (2017-10-01), pages 5685 - 5691, XP033247628, DOI: 10.1109/ECCE.2017.8096945
- GOETZ STEFAN M ET AL: "Concept of a distributed photovoltaic multilevel inverter with cascaded double H-bridge topology", INTERNATIONAL JOURNAL OF ELECTRICAL POWER & ENERGY SYSTEMS, vol. 110, 2 April 2019 (2019-04-02), pages 667 - 678, XP085665313, ISSN: 0142-0615, DOI: 10.1016/J.IJEPES.2019.03.054

## Beschreibung

Die vorliegende Erfindung betrifft ein Verfahren zur Schaltsteuerung eines Multilevelkonverters, insbesondere zu dessen Echtzeitsteuerung. Ferner wird ein System zu einer Umsetzung dieser Schaltsteuerung beansprucht.

Um aus einer Gleichspannung eine Wechselspannung vorbestimmter Frequenz zu erhalten, werden Ein- und Ausgangsspannungen in einer herkömmlichen Leistungselektronik mit wenigen Leistungsschaltern zwischen wenigen, meist zwei oder drei Niveaus, geschaltet, um im Mittel die gewünschte Größe zu erhalten. Im Gegensatz dazu arbeiten moderne Multilevelkonverter nach einem Schema, die Wechselspannung durch eine dynamische wechselbare Konfiguration von über eine Vielzahl elektronischer Schalter verschalteten Energiespeichern, wie bspw. Kondensatoren oder Energiezellen, zu erzeugen. Dabei kommen wesentlich mehr elektronische Schalter, bspw. Leistungshalbleiterschalter, als bei einer herkömmlichen Leistungselektronik zum Einsatz, woraus eine Vielzahl von realisierbaren Gesamtschaltzuständen und damit verbundenen Ausgangsspannungen des Multilevelkonverters in sehr feinen Abstufungen bzw. Leveln gebildet werden kann.

Grundsätzlich lässt sich eine jeweilige Bauart eines Multilevelkonverters anhand eines Einzelmoduls definieren, bspw. dargestellt in der Druckschrift DE 10 2015 112 512 A1 der Anmelderin. Je nach Schaltungsanordnung der von einem Einzelmodul umfassten Schaltelemente können alle eine Verschaltung des ebenfalls umfassten Energiespeichers betreffenden Schaltzustände unabhängig von zusätzlichen angeschlossenen, baulich gleichen Einzelmodulen erreicht werden.

In der US-amerikanischen Druckschrift US 2017/0123014 A1 wird eine dynamische Änderung der Konnektivität einzelner Batteriekomponenten offenbart. Dadurch wird eine Mehrzahl von Energiespeichern untereinander verschaltet.

Die chinesische Druckschrift CN 105429495 A beschreibt einen Wechsel zwischen Serien- oder Parallelschaltung benachbarter Module eines modularen Multilevel-Wandlers in Echtzeit. Dabei können Schaltverluste stark reduziert werden.

Die Druckschrift US 2014/0028266 A1 offenbart eine Einrichtung eines modularen Multilevelkonverters, welche einen Steuerblock für Batteriemodule umfasst. Eine Auswahl einer Zusammenschaltung von Batteriemodulen wird in Abhängigkeit einer angefragten Leistung getroffen.

Ein Grundproblem der Steuerung modularer Multilevelkonverter ist die hohe Anzahl an Freiheitsgraden, d. h. die Vielzahl unterschiedlicher Schalt- oder Modulzustände, welche zunächst die gleiche Spannung bilden. Eine Gesamtheit der Modulzustände legt eine Ausgangsspannung des Multilevelkonverters fest. Zu einem Betrieb des Multilevelkonverters muss ein Steuergerät der Schaltsteuerung, ein sogenannter Scheduler, zu jedem Zeitpunkt die Zustände aller Module festlegen und aktiv steuern. Eine solche Zustandsermittlung und -zuweisung an alle Schalter aller Module geschieht bei einer Taktfrequenz zwischen 1 kHz und 1 MHz entsprechend 1000 bis 1 Million Mal pro Sekunde.

Vorteilhaft wäre hier ein Echtzeit-Optimierungsverfahren, welches gemäß eines aktuellen Zustandes aller Energiespeicher des Multilevelkonverters und/oder weiterer denkbarer Nebenbedingungen, wie bspw. gleichmäßiger Belastung der Energiespeicher, eine mathematische Optimierung ermittelt. Für eine echte mathematische Optimierung müssten prinzipiell alle möglichen Schaltzustände, bspw. bei 10 MMSPC-artigen Modulen mit mindestens fünf Schaltzuständen pro Modul, in Summe 5^10 und damit fast 10^7 gleich 10 Millionen mögliche Schaltzustände je Zeitschritt berechnet und gegeneinander abgewogen werden. Dann müsste eine gewisse Zahl von Zeitschritten in die Zukunft berechnet werden, um diesbezüglich eine beste Lösung zu finden. Bei M Zeitschritten wären das (5^10)^M Alternativen. Allein eine Berechnung für zwei Zeitschritte würde bereits mit etwa 10^21 Alternativen den Rahmen eines Hochleistungsrechners (10^15 Operationen pro Sekunde) bei weitem übersteigen. Daher ist keines der existierenden Verfahren bislang in der Lage, diesen gigantischen Rechenaufwand zu bewältigen. Heuristische Verfahren hingegen können zwar - je nach Komplexität - online zu Lösungen kommen, diese werden aber immer auch einen gewissen Abstand zu einem optimalen Gesamtschaltzustand aufweisen.

Vor diesem Hintergrund ist es eine Aufgabe der vorliegenden Erfindung, ein Verfahren zu einer Steuerung von Schaltzuständen aller Schalter eines Multilevelkonverters zur Verfügung zu stellen, welches online, d. h. bei einem Betrieb des Multilevelkonverters in Echtzeit, zu einer jeweiligen Spannungsanforderung einen jeweiligen optimalen Gesamtschaltzustand des Multilevelkonverters gemäß vorgegebenen Nebenbedingungen berechnet und einer Steuerung des Multilevelkonverters bereitstellt. Ferner soll ein zugehöriges System vorgestellt werden.

Zur Lösung der voranstehend genannten Aufgabe wird ein Verfahren gemäß Anspruch 1 zu einer Schaltsteuerung eines Multilevelkonverters vorgeschlagen, bei dem der Multilevelkonverter eine Mehrzahl von Modulen aufweist, bei dem ein jeweiliges Modul der Mehrzahl von Modulen mindestens einen Anschluss auf einer ersten Seite und mindestens einen Anschluss auf einer zweiten Seite, mindestens zwei steuerbare Schalter und mindestens einen Energiespeicher aufweist. In einer Ausführungsform ist in einer ersten Verbindung zwischen dem mindestens einen Anschluss auf der ersten Seite und dem mindestens einen Anschluss auf der zweiten Seite der mindestens eine Energiespeicher in Reihe mit einem ersten der mindestens zwei steuerbaren Schalter angeordnet, und in einer zweiten Verbindung ist zwischen dem mindestens einen Anschluss auf der ersten Seite und dem mindestens einen Anschluss auf der zweiten Seite ein zweiter der mindestens zwei steuerbaren Schalter angeordnet. Durch diese Ausführungsform lässt sich zwischen dem ersten und dem zweiten Anschluss des jeweiligen Moduls der Mehrzahl von Modulen der Energiespeicher in Reihe schalten, oder er lässt sich umgehen, oder es lässt sich eine elektrische Leitung komplett unterbrechen. In einer weiteren Ausführungsform weist das jeweilige Modul der Mehrzahl von Modulen mindestens zwei Anschlüsse auf der ersten und mindestens zwei Anschlüsse auf der zweiten Seite auf. Der mindestens eine Energiespeicher ist unmittelbar zwischen den mindestens zwei Anschlüssen der ersten Seite oder der zweiten Seite angeordnet, ein erster der mindestens zwei steuerbaren Schalter ist zwischen einem ersten Anschluss auf der ersten Seite und einem ersten Anschluss auf der zweiten Seite angeordnet, und ein zweiter der mindestens zwei steuerbaren Schalter ist zwischen einem zweiten Anschluss auf der ersten Seite und einem zweiten Anschluss auf der zweiten Seite angeordnet. Durch diese Ausführungsform lässt sich bei geschlossenem Zustand der mindestens zwei Schalter der Energiespeicher des jeweiligen Moduls der Mehrzahl von Modulen parallel zu weiteren Modulen der Mehrzahl von Modulen schalten, wobei durch andere Schaltzustände weiterhin eine Reihenschaltung oder eine Umgehung des Energiespeichers möglich ist. Jedes Modul der Mehrzahl von Modulen weist durch jeweilige Schalterstellungen der mindestens zwei steuerbaren Schalter einen jeweiligen Modulschaltzustand auf. Durch die Schaltsteuerung wird ein Gesamtschaltzustand aus jeweiligen Modulschaltzuständen der Mehrzahl von Modulen gebildet. Kontinuierlich wird der Schaltsteuerung ein aktueller Ladezustand aller Energiespeicher des Multilevelkonverters bereitgestellt. Die Schaltsteuerung wird in einen Offline-Teil und einen Online-Teil aufgeteilt. Im Offline-Teil wird eine Mehrzahl an Offline-Schalttabellen durch einen Optimierer in kontinuierlicher Abfolge berechnet und zu einer Berechnung einer jeweiligen Offline-Schalttabelle der Mehrzahl an Offline-Schalttabellen eine jeweilige Kostenfunktion gemäß mindestens eines jeweilig vorgegebenen Offline-Optimierungskriteriums für eine Bewertung des Gesamtschaltzustandes minimiert. Im Online-Teil wird in kontinuierlicher Abfolge nach einem vorgegebenen Online-Auswahlkriterium eine Online-Schalttabelle aus der Mehrzahl an Offline-Schalttabellen ausgewählt, für jeden Zeitschritt in Realzeit einer jeweiligen Spannungsanforderung durch einen Modulator ein jeweiliges Spannungslevel zugewiesen, zu dem jeweiligen Spannungslevel durch einen Scheduler ein jeweiliger Gesamtschaltzustand anhand der ausgewählten Online-Schalttabelle ermittelt und an alle Module weitergegeben.

Ein zentraler Multilevelkonverter, auf dem das erfindungsgemäße Verfahren vorteilhaft ausgeführt werden kann, ist der modulare Multilevelkonverter MMSPC, beschrieben durch S. M. Goetz, A. V. Peterchev and T. Weyh, "Modular Multilevel Converter With Series and Parallel Module Connectivity: Topology and Control," in IEEE Transactions on Power Electronics, vol. 30, no. 1, pp. 203-215, Jan. 2015 und ferner in den Druckschriften US 9,502,960 B2 sowie DE 10 2016 112 250 A1. Dieser zeichnet sich gegenüber konventionellen modularen Multilevelkonvertern, bspw. von R. Marquardt in der Druckschrift DE 101 03 0301 A1 beschrieben, und auf die die Erfindung ebenso anwendbar ist, durch die Existenz eines zusätzlichen Parallel-Zustands aus, wodurch ein MMSPC in einem Strang eine nahezu beliebige elektrische seriell-parallele Schaltungskonfiguration von modulintegrierten Energiespeichern erzeugen und diese dynamisch ändern kann. Ferner steht zumeist auch ein Umgehungszustand, ein sogenannter Bypass zur Verfügung, um den Energiespeicher eines Moduls zu umgehen. Generell kann bei modularen Multilevelkonvertern ein Modulschaltzustand, also die Schaltzustände der Schalter des einzelnen Moduls, gemäß folgender Liste eindeutig beschrieben werden: parallel, seriell, Bypass, abgeschaltet. Eine Anwendung stellt ein modularer Multiphasen-Multilevelkonverter dar, bei dem jeweils mehrere Module in einem Strang angeordnet werden, wobei ein jeweiliger Strang dann eine jeweilige Phase einer mehrphasigen Wechselspannung bereitstellt.

Eine jeweilige Schalttabelle, auch als Look-Up-Tabelle bezeichnet, weist jedem der bei N Modulen meist (2N+1) am Ausgang des Multilevelkonverters darzustellenden Spannungsleveln eine Kombination von Schalterstellungen in den jeweiligen Modulen zu, wobei die jeweiligen Schalterstellungen innerhalb eines jeweiligen Moduls zusammengefasst als ein jeweiliger Modulschaltzustand bezeichnet werden. Im Wesentlichen geht es bei dem jeweiligen Modulschaltzustand eines jeweiligen Moduls immer darum, wie der vom jeweiligen Modul umfasste Energiespeicher mit den weiteren Energiespeichern des Multilevelkonverters verschaltet ist. Aus der Online-Schalttabelle sucht der Scheduler für ein ihm vom Modulator quantisiertes und übergebenes Spannungslevel einen Gesamtschaltzustand, der durch die jeweiligen Modulschaltzustände definiert ist bzw. definiert sein kann. So werden beispielhaft für den voranstehend erwähnten MMSPC bei einem jeweiligen Modul mit acht Halbleiterschaltern (S₁, S₂, S₃, S₄, S₅, S₆, S₇, S₈), angeordnet zu zwei Seiten mit jeweils zwei Halbbrücken auf einer Seite, zu Eingangsanschlüssen liegendem Energiespeicher und zu einer hochseitigen bzw. High-Side-Verbindung und einer niederseitigen bzw. Low-Side-Verbindung zusammengeschlossen, insgesamt fünf Modulschaltzustände festgelegt, für die die acht Schalter die in Tabelle 1 aufgeführten Schalterstellungen einnehmen. Die Modulschaltzustände lauten: "s+" für serielle Verschaltung mit positiver Polarität, "s-" für serielle Verschaltung mit negativer Polarität, "p" für parallele Verschaltung, "b+" für Bypass mit positiver Polarität und "b-" für Bypass mit negativer Polarität. Dabei bedeutet die positive bzw. negative Polarität, welche Polarität der beiden Anschlüsse auf der ersten Seite des Moduls auf die beiden Anschlüsse auf der zweiten Seite des Moduls durchgeschaltet wird. Beim Bypass bzw. einer Modulumgehung ist dies gleichbedeutend mit Durchschaltung über die High-Side-Verbindung, oder die Low-Side-Verbindung, der in Halbbrücken angeordneten Schalter des Beispiel-Moduls.

**Tabelle 1: Modulschaltzustände s+, s-, p, b+, b- und jeweilige Schalterstellungen der acht Schalter S1 bis S8 des im Text beschriebenen Beispiel-Moduls eines MMSPC.**

| | **S₁** | **S₂** | **S₃** | **S₄** | **S₅** | **S₆** | **S₇** | **S₈** |
|---|---|---|---|---|---|---|---|---|
| **s+** | ON | OFF | ON | OFF | OFF | ON | OFF | ON |
| **s-** | OFF | ON | OFF | ON | ON | OFF | ON | OFF |
| **P** | ON | OFF | OFF | ON | ON | OFF | OFF | ON |
| **b+** | ON | OFF | ON | OFF | ON | OFF | ON | OFF |
| **b-** | OFF | ON | OFF | ON | OFF | ON | OFF | ON |

Zwischen einem ersten Extrem mit einem echtzeitfähigen Scheduler und nur einer einzigen Look-Up-Tabelle, aus welcher bei fester Zuordnung je nach einer Mehrzahl an Bedingungen der nächste Modulschaltzustand (aller Module) ausgelesen werden kann, und einem zweiten Extrem mit einer Volloptimierung, d. h. Test aller Schaltzustandsalternativen und Bewertung der besten Schaltzustände nach vorgegebenen Optimierungskriterien, bietet das erfindungsgemäße Verfahren eine Mischung der beiden Extremalfälle an, die auch als Hybridlösung angesehen werden kann. In dem Offline-Teil findet weiterhin eine Optimierung statt, welche mit einem festen Geschwindigkeitsverhältnis zum Online-Teil ablaufen kann, aber auch nicht muss, d. h. asynchron sein kann. Diese Optimierung erzeugt nun allerdings eine Mehrzahl an alternativen Schalttabellen mit mehreren alternativen Modulschaltzuständen. Unter diesen Alternativen kann damit im Online-Teil mit nur geringem Rechenaufwand in Echtzeit ausgewählt werden.

In einer Ausführungsform des erfindungsgemäßen Verfahrens wird das jeweilige vorgegebene Online-Auswahlkriterium und/oder das jeweilige vorgegebene Offline-Optimierungskriterium für die Bewertung des Gesamtschaltzustandes durch die Kostenfunktion mindestens aus folgender Liste gewählt wird: minimale Strombelastung eines jeweiligen Energiespeichers, gleichmäßige Entladung aller Energiespeicher des Multilevelkonverters, minimale Durchlassverluste, minimale Verluste in den Energiespeichern, minimale Gesamtverluste. Wird bspw. eine gleichmäßige Entladung aller Energiespeicher als ein Online-Auswahlkriterium gewählt, um die Entladung eines einzelnen Moduls nahe am über alle Module gemittelten Entladungszustand zu gestalten, so erfolgt dies in einem Kurzzeitdurchschnitt. Demgegenüber wird im Offline-Teil mit dem nichtechtzeitfähigen Optimierer für die gleiche, aber nun als Offline-Optimierungskriterium gewählte gleichmäßige Entladung aller Energiespeicher lediglich ein Langzeitdurchschnitt erreicht werden können. Als weiteres Beispiel ist die voranstehend genannte minimale Strombelastung eines jeweiligen Energiespeichers zu nennen, welche möglichst niedrig, aber von einer Zeitdauer her vor allem unterhalb einer Sekunde liegen sollte, besser sogar nur ein Vielfaches von 100 ms oder noch kleiner beträgt.

Es ist denkbar, dass eine Auswahl an ganzzahlig M Offline-Schalttabellen aus der Mehrzahl an Offline-Schalttabellen mit einem ähnlichen Minimierungswert der Kostenfunktion bereitgestellt wird. Damit wird erreicht, dass die bereitgestellten Alternativen eher eine zufällige Auswahl mit gleichen oder ähnlich guten Kostenfunktionswerten darstellen.

Es ist denkbar, dass eine durch den Optimierer bereitgestellte jeweilige Offline-Schaltabelle aus der Mehrzahl an Offline-Schalttabellen auf ein jeweilig unterschiedliches Offline-Optimierungskriterium hin optimiert wird. Damit wird erreicht, dass eine jeweilige Auswahl unter der bereitgestellten Mehrzahl an Offline-Schalttabellen bereits ein jeweiliges Ziel optimiert.

Erfindungsgemäß wird die Online-Schalttabelle aus der Mehrzahl an Online-Schalttabellen zu jedem Zeitschritt erneut ausgewählt.

Es ist denkbar, dass als Online-Auswahlkriterium zur Auswahl der Online-Schalttabelle aus der Mehrzahl an Online-Schalttabellen ein anderes als das jeweilige Offline-Optimierungskriterium zur Berechnung der Mehrzahl an Offline-Schalttabellen gewählt wird. Die jeweiligen alternativen Online-Schalttabellen können bspw. so identifiziert werden, dass die Optima aus den Zielfunktionen des asynchronen Offline-Teils, bspw. die besten ganzzahlig K, noch einmal einer Bewertung hinsichtlich eines weiteren Zieles unterzogen werden, und davon ganzzahlig L kleiner als K ausgewählt werden. Dieses weitere Ziel kann bspw. hinsichtlich einer Stromlast einzelner Module voneinander abweichen. Denkbar wäre aber auch, als weiteres Ziel einfach ein zum zuerst gewählten Ziel komplementäres Ziel ist, bspw. die Module im Offline-Optimierungskriterium als sehr hoch durch Entladungsstrom belastet, im weiteren Ziel dafür als sehr unterdurchschnittlich belastet.

Erfindungsgemäß wird zu einem vorgegebenen Offline-Optimierungskriterium eine der Anzahl N an Modulen entsprechende Anzahl N an Schaltvektoren berechnet. Durch einen jeweiligen Schaltvektor der Anzahl N an Schaltvektoren werden für ein jeweiliges Modul der Anzahl N an Modulen jeweils optimale Schalterstellungen gemäß des vorgegebenen Offline-Optimierungskriteriums aufgewiesen. Ein jeweiliger Schaltvektor der Anzahl N dieser Schaltvektoren entspricht einer jeweiligen Offline-Schalttabelle einer Anzahl N der Mehrzahl an Offline-Schalttabellen, wobei die Anzahl N der Mehrzahl an Offline-Schalttabellen einen vollständigen Vektorraum aufspannt.

Es ist denkbar, dass die Online-Schalttabelle durch eine in Anteilen von Zeitschritten verteilte Linearkombination der Anzahl N der Mehrzahl an Offline-Schalttabellen bereitgestellt wird. Ein jeweiliger Linearkoeffizient entsprechend dem vorgegebenen Online-Auswahlkriterium berechnet wird und ein skalarer Wert des jeweiligen Linearkoeffizienten einem jeweiligen Anteil an Zeitschritten in einem zeitlichen Verlauf mehrerer Zeitschritte entspricht. Bei einem solchen Verfahren ist allerdings nicht sichergestellt, dass eine Gewichtung der jeweiligen Anzahl N der Mehrzahl an Offline-Schalttabellen in der Linearkombination für einen Ausgleich bspw. der Strombelastung gleich sind. Entsprechend kann eine andere Lösung die Alternativen so auswählen, dass eine gleichlange Nutzung jeder Alternative im zeitlichen Mittel zu relativ ausgeglichener Strombelastung der einzelnen Energiespeicher führt.

In einer fortgesetzt weiteren Ausführungsform des erfindungsgemäßen Verfahrens werden nach einer Auswahl einer Online-Schalttabelle bei jedem weiteren Zeitschritt die jeweilig den einzelnen Modulen zugeordneten Modulschaltzustände jeweils zum nächsten Modul eines Modulstranges permutiert.

Alternativen zu einer bestehenden Modulkonfiguration können auch systematisch erzeugt werden. Da ein solcher Prozess sehr schnell ist und eine endliche Ausführzeit garantieren kann, kann er auch im Online-Teil erfolgen. Entsprechend kann als ein alternativer Lösungsansatz auch der bisherige asynchrone (langsame/nicht echtzeitfähige) Teil des Schedulers verwendet und nur der echtzeitfähige Teil modifiziert werden. Dabei wird aus einem bestehenden Gesamtschaltzustand extrahiert, wie viele Intermodulverbindungen in welchem Modulschaltzustand sind (bspw. 3 s+, 1 p, 1 b+), wobei eine Positionsinformation jedes Modulschaltzustandes (d. h. an welcher Intermodulverbindung nun welcher Modulschaltzustand vorliegt) vergessen wird. Die Alternativen werden nun durch Umverteilung der Modulschaltzustände auf Intermodulverbindungen erzeugt. Der Online-Teil verwendet nun bspw. anfangs den in der Look-Up-Table für die aktuellen Bedingungen eingetragenen Modulschaltzustand. Dieser kann nach seiner Verwendung markiert werden (entweder durch ein Flag oder einen Zähler). Sollte der Scheduler vor einem Update der Tabelle diesen Modulschaltzustand noch ein weiteres Mal verwenden wollen (oder mehr als eine bestimmte Anzahl, oder bei jeder zweiten Verwendung), wird dies an der Markierung oder dem Zähler erkannt und der Modulschaltzustand durch Umsortierung variiert. Auf diese Weise lässt sich vorteilhaft die Modulspeicherlast sehr schnell verteilen.

Des Weiteren kann immer erzwungen werden, dass eine beste Lösung, bspw. mit minimalem Wert der Kostenfunkton, stets Teil der Mehrzahl an Online-Schalttabellen ist.

Ferner wird ein System gemäß Anspruch 3 aufweisend eine Schaltsteuerung für ein Multilevelkonverter und ein Multilevelkonverter beansprucht, bei dem der Multilevelkonverter eine Mehrzahl von Modulen aufweist. Ein jeweiliges Modul der Mehrzahl von Modulen weist mindestens einen Anschluss auf einer ersten und mindestens einen Anschluss auf einer zweiten Seite, mindestens zwei steuerbare Schalter und mindestens einen Energiespeicher auf. In einer ersten Ausgestaltung ist in einer ersten Verbindung zwischen dem mindestens einen Anschluss auf der ersten Seite und dem mindestens einen Anschluss auf der zweiten Seite der mindestens eine Energiespeicher in Reihe mit einem ersten der mindestens zwei steuerbaren Schalter angeordnet, und in einer zweiten Verbindung ist zwischen dem mindestens einen Anschluss auf der ersten Seite und dem mindestens einen Anschluss auf der zweiten Seite ein zweiter der mindestens zwei steuerbaren Schalter angeordnet. Durch diese Ausgestaltung lässt sich zwischen dem ersten und dem zweiten Anschluss des jeweiligen Moduls der Mehrzahl von Modulen der Energiespeicher in Reihe schalten, oder er lässt sich umgehen, oder es lässt sich eine elektrische Leitung komplett unterbrechen. In einer zweiten Ausgestaltung weist das Modul der Mehrzahl von Modulen mindestens zwei Anschlüsse auf der ersten und mindestens zwei Anschlüsse auf der zweiten Seite auf. Der mindestens eine Energiespeicher ist unmittelbar zwischen den mindestens zwei Anschlüssen der ersten Seite oder der zweiten Seite angeordnet, und ein erster der mindestens zwei steuerbaren Schalter ist zwischen einem ersten Anschluss auf der ersten Seite und einem ersten Anschluss auf der zweiten Seite angeordnet. Ein zweiter der mindestens zwei steuerbaren Schalter ist zwischen einem zweiten Anschluss auf der ersten Seite und einem zweiten Anschluss auf der zweiten Seite angeordnet. Jedes Modul der Mehrzahl von Modulen weist durch jeweilige Schalterstellungen der mindestens zwei steuerbaren Schalter einen jeweiligen Modulschaltzustand auf, Durch die Schaltsteuerung ist ein Gesamtschaltzustand aus jeweiligen Modulschaltzuständen der Mehrzahl von Modulen gebildet. Das System umfasst einen Modulator und einen Scheduler und der Schaltsteuerung ist kontinuierlich ein aktueller Ladezustand aller Energiespeicher des Multilevelkonverters bereitgestellt. Die in einen Offline-Teil und einen Online-Teil aufgeteilte Schaltsteuerung ist dazu konfiguriert im Offline-Teil durch einen Optimierer in kontinuierlicher Abfolge eine Mehrzahl an Offline-Schalttabellen zu berechnen und zu einer Berechnung einer jeweiligen Offline-Schalttabelle der Mehrzahl an Offline-Schalttabellen eine jeweilige Kostenfunktion gemäß mindestens eines jeweilig vorgegebenen Offline-Optimierungskriteriums für eine Bewertung des Gesamtschaltzustandes zu minimieren. Die Schaltsteuerung ist weiter dazu konfiguriert, im Online-Teil, in kontinuierlicher Abfolge nach einem vorgegebenen Online-Auswahlkriterium eine Online-Schalttabelle aus der Mehrzahl an Offline-Schalttabellen auszuwählen, für jeden Zeitschritt in Realzeit einer jeweiligen Spannungsanforderung durch einen Modulator ein jeweiliges Spannungslevel zuzuweisen, und zu dem jeweiligen Spannungslevel durch einen Scheduler einen jeweiligen Gesamtschaltzustand anhand der ausgewählten Online-Schalttabelle zu ermitteln und an alle Module weiterzugeben.

In Ausgestaltung des erfindungsgemäßen Systems ist das System dazu ausgelegt ist, ein erfindungsgemäßes Verfahren auszuführen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

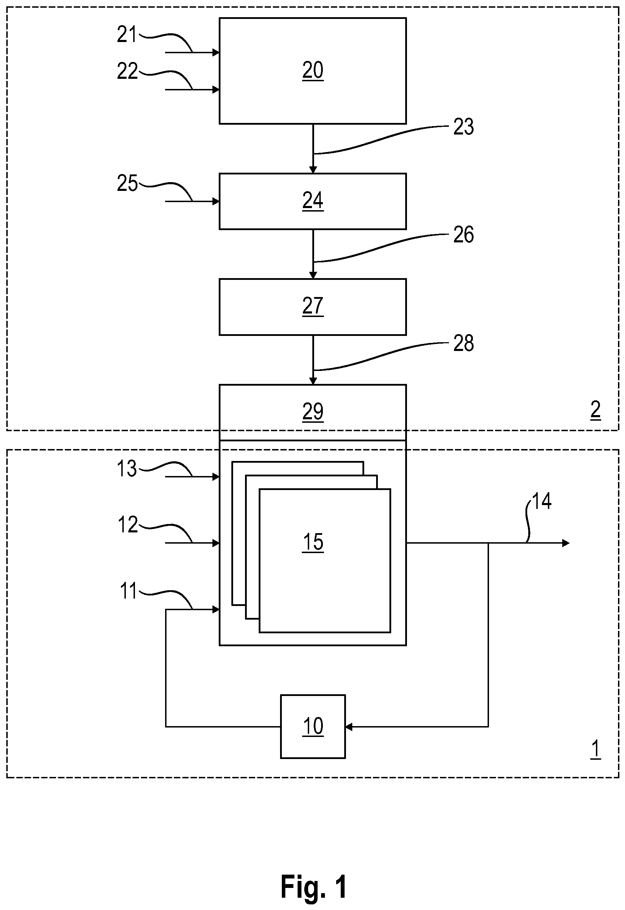

Figur 1 zeigt in schematischer Darstellung einen Online- und Offline-Teil einer Schaltsteuerung gemäß einer Ausführungsform des erfindungsgemäßen Verfahrens.

In Figur 1 wird in schematischer Darstellung ein Online-Teil 1, auch als High-speedloop bezeichnet, und ein Offline-Teil 2, auch als Low-speed-loop bezeichnet, einer Schaltsteuerung eines modularen Multilevelkonverters gemäß einer Ausführungsform des erfindungsgemäßen Verfahrens gezeigt. Im Offline-Teil 2 werden mehrere Lösungen zu einer jeweiligen Kostenfunktion berechnet. Hierzu werden in einer Tabelle mit allen zur Verfügung stehenden Gesamtschaltzuständen 20 diejenigen Schalterstellungen abgefragt, die einen jeweiligen möglichen Modulschaltzustand 21 und eine zu schaltenden Spannungsdifferenz 22 umsetzen können abgefragt. Als Ergebnis 23 seien hier bspw. sechs mögliche Modulschaltzustände ausgegeben, welche die vorgegebenen Bedingungen 21, 22 realisieren können. Diese finden Eingang in eine Berechnung einer Kostenfunktion 24 gemäß einem jeweiligen Offline-Optimierungskriterium, wobei hier bspw. noch eine Stromrichtung 25 eines Strangs mit den jeweiligen Modulen eingeht. Ausgegeben werden daher bei dem Beispiel von sechs gefunden Modulschaltzuständen 23 insgesamt zwei mal sechs, also zwölf Werte 26 der Kostenfunktion 24. Unter diesen zwölf Werten 26 werden bspw. diejenigen (zweit auf Grund der Stromrichtung) Modulschaltzustände 28 bestimmt, welche einen kleinsten Kostenfunktionswert 27 unter den Werten 26 aufweist. Diese Modulschaltzustände 28 zu den beiden Stromrichtungen bilden die in dem Offline-Teil 2 berechneten Offline-Schalttabellen 29, welche bspw. für jede mögliche Konstellation an vorgegebenen Bedingungen 21, 22 bzw. eine Unterauswahl davon berechnet werden und so eine Mehrzahl an Offline-Schalttabellen 29 bereitstellen. Im Online-Teil 1 kann nun mit einem bedeutend geringeren Rechenaufwandes auf die bereitgestellte Mehrzahl an Offline-Schalttabellen 29 zurückgegriffen wird. Ein Modulator 10 gibt für einen jeweilig angefragten bzw. auszugebenden Gesamtschaltzustand 14, bspw. vorgegeben durch ein sinusförmiges Referenzsignal, ein bestimmtes durch den modularen Multilevelkonverter auszugebendes Spannungslevel vor, welches aus einem aktuellen Modulschaltzustand 11, bei vorgegebener Spannungsdifferenz 12 und Stromrichtung 13 gemäß einer Online-Schalttabelle aus der Mehrzahl an Online-Schalttabellen 15 gebildet wird. Eine Auswahl der jeweiligen Online-Schalttabelle aus der Mehrzahl an Online-Schalttabellen kann gemäß einem Online-Auswahlkriterium erfolgen.

## Patentansprüche

1. Verfahren zu einer Schaltsteuerung eines Multilevelkonverters, bei dem der Multilevelkonverter eine Mehrzahl von Modulen aufweist, bei dem jedes Modul der Mehrzahl von Modulen mindestens einen Anschluss auf einer ersten Seite und mindestens einen Anschluss auf einer zweiten Seite, mindestens zwei steuerbare Schalter und mindestens einen Energiespeicher aufweist, bei dem in einer ersten Verbindung zwischen dem mindestens einen Anschluss auf der ersten Seite und dem mindestens einen Anschluss auf der zweiten Seite der mindestens eine Energiespeicher in Reihe mit einem ersten der mindestens zwei steuerbaren Schalter angeordnet ist, und in einer zweiten Verbindung zwischen dem mindestens einen Anschluss auf der ersten Seite und dem mindestens einen Anschluss auf der zweiten Seite ein zweiter der mindestens zwei steuerbaren Schalter angeordnet ist, bei dem jedes Modul der Mehrzahl von Modulen durch jeweilige Schalterstellungen der mindestens zwei steuerbaren Schalter einen jeweiligen Modulschaltzustand (21) aufweist, bei dem durch die Schaltsteuerung ein Gesamtschaltzustand (14, 20) aus jeweiligen Modulschaltzuständen (21) der Mehrzahl von Modulen gebildet wird, wobei ein aktueller Ladezustand aller Energiespeicher des Multilevelkonverters kontinuierlich der Schaltsteuerung bereitgestellt wird, bei dem die Schaltsteuerung in einen Offline-Teil (2) und einen Online-Teil (1) aufgeteilt wird,
wobei im Offline-Teil (2)
• durch einen Optimierer in kontinuierlicher Abfolge eine Mehrzahl an alternativen Offline-Schalttabellen (29) berechnet wird und
• zu einer Berechnung einer jeweiligen Offline-Schalttabelle der Mehrzahl an alternativen Offline-Schalttabellen (29) eine jeweilige Kostenfunktion (24) gemäß mindestens eines jeweilig vorgegebenen Offline-Optimierungskriteriums für eine Bewertung des Gesamtschaltzustandes (20) minimiert wird,
wobei im Online-Teil (1)
• in kontinuierlicher Abfolge nach einem vorgegebenen Online-Auswahlkriterium eine Online-Schalttabelle aus der Mehrzahl an alternativen Offline-Schalttabellen (29) ausgewählt wird,
• für jeden Zeitschritt in Realzeit einer jeweiligen Spannungsanforderung durch einen Modulator (10) ein jeweiliges Spannungslevel zugewiesen wird,
• zu dem jeweiligen Spannungslevel durch einen Scheduler ein jeweiliger Gesamtschaltzustand (14) anhand der ausgewählten Online-Schalttabelle ermittelt und an alle Module weitergegeben wird,
wobei die Online-Schalttabelle (15) aus der Mehrzahl an alternativen Offline-Schalttabellen (29) zu jedem Zeitschritt in Realzeit ausgewählt wird, bei dem zu einem vorgegebenen Offline-Optimierungskriterium eine der Anzahl N an Modulen entsprechende Anzahl N an Schaltvektoren berechnet wird, wobei durch einen jeweiligen Schaltvektor der Anzahl N an Schaltvektoren für ein jeweiliges Modul der Anzahl N an Modulen jeweils optimale Schalterstellungen gemäß des vorgegebenen Offline-Optimierungskriteriums aufgewiesen werden, wobei ein jeweiliger Schaltvektor der Anzahl N dieser Schaltvektoren einer jeweiligen Offline-Schalttabelle einer Anzahl N der Mehrzahl an Offline-Schalttabellen (29) entspricht und die Anzahl N der Mehrzahl an Offline-Schalttabellen (29) einen vollständigen Vektorraum aufspannt, wobei der Gesamtschaltzustand anhand der ausgewählten Online-Schalttabelle ermittelt wird, und dabei das jeweilige vorgegebene Online-Auswahlkriterium und/oder das jeweilige vorgegebene Offline-Optimierungskriterium für die Bewertung des Gesamtschaltzustandes (14) durch die Kostenfunktion mindestens aus folgender Liste gewählt wird: minimale Strombelastung eines jeweiligen Energiespeichers, gleichmäßige Entladung aller Energiespeicher des Multilevelkonverters, minimale Durchlassverluste, minimale Verluste in den Energiespeichern, minimale Gesamtverluste, wodurch erreicht wird, dass eine gleichlange Nutzung jeder Alternative im zeitlichen Mittel zu relativ ausgeglichener Strombelastung der einzelnen Energiespeicher führt.

2. Verfahren nach einem der voranstehenden Ansprüche, bei dem nach einer Auswahl einer Online-Schalttabelle aus der Mehrzahl an Online-Schalttabellen (15) bei jedem weiteren Zeitschritt die jeweilig den einzelnen Modulen zugeordneten Modulschaltzustände jeweils zum nächsten Modul eines Modulstranges permutiert werden.

3. System aufweisend eine Schaltsteuerung für ein Multilevelkonverter und ein Multilevelkonverter, bei dem der Multilevelkonverter eine Mehrzahl von Modulen aufweist, bei dem jedes Modul der Mehrzahl von Modulen mindestens einen Anschluss auf einer ersten Seite und mindestens einen Anschluss auf einer zweiten Seite, mindestens zwei steuerbare Schalter und mindestens einen Energiespeicher aufweist, bei dem in einer ersten Verbindung zwischen dem mindestens einen Anschluss auf der ersten Seite und dem mindestens einen Anschluss auf der zweiten Seite der mindestens eine Energiespeicher in Reihe mit einem ersten der mindestens zwei steuerbaren Schalter angeordnet ist, und in einer zweiten Verbindung zwischen dem mindestens einen Anschluss auf der ersten Seite und dem mindestens einen Anschluss auf der zweiten Seite ein zweiter der mindestens zwei steuerbaren Schalter angeordnet ist, bei dem jedes Modul der Mehrzahl von Modulen durch jeweilige Schalterstellungen der mindestens zwei steuerbaren Schalter einen jeweiligen Modulschaltzustand (21) aufweist, bei dem durch die Schaltsteuerung ein Gesamtschaltzustand (14, 20) aus jeweiligen Modulschaltzuständen (21) der Mehrzahl von Modulen gebildet ist, wobei das System ferner einen Modulator (10) und einen Scheduler umfasst und ein aktueller Ladezustand aller Energiespeicher des Multilevelkonverters kontinuierlich der Schaltsteuerung bereitzustellen ist, wobei die in einen Offline-Teil (2) und einen Online-Teil (1) aufgeteilte Schaltsteuerung dazu konfiguriert ist
im Offline-Teil (2)
• durch einen Optimierer in kontinuierlicher Abfolge eine Mehrzahl an alternativen Offline-Schalttabellen (29) zu berechnen und
• zu einer Berechnung einer jeweiligen Offline-Schalttabelle der Mehrzahl an alternativen Offline-Schalttabellen (29) eine jeweilige Kostenfunktion (24) gemäß mindestens eines jeweilig vorgegebenen Offline-Optimierungskriteriums für eine Bewertung des Gesamtschaltzustandes (20) zu minimieren, und
im Online-Teil (1)
• in kontinuierlicher Abfolge nach einem vorgegebenen Online-Auswahlkriterium eine Online-Schalttabelle aus der Mehrzahl an alternativen Offline-Schalttabellen (29) auszuwählen,
• für jeden Zeitschritt in Realzeit einer jeweiligen Spannungsanforderung durch einen Modulator (10) ein jeweiliges Spannungslevel zuzuweisen, und
• zu dem jeweiligen Spannungslevel durch einen Scheduler einen jeweiligen Gesamtschaltzustand (14) anhand der ausgewählten Online-Schalttabelle zu ermitteln und an alle Module weiterzugeben,
wobei die Schaltsteuerung zusätzlich dazu konfiguriert ist, die Online-Schalttabelle (15) aus der Mehrzahl an alternativen Offline-Schalttabellen (29) zu jedem Zeitschritt in Realzeit auszuwählen, zu einem vorgegebenen Offline-Optimierungskriterium eine der Anzahl N an Modulen entsprechende Anzahl N an Schaltvektoren zu berechnen, wobei durch einen jeweiligen Schaltvektor der Anzahl N an Schaltvektoren für ein jeweiliges Modul der Anzahl N an Modulen jeweils optimale Schalterstellungen gemäß des vorgegebenen Offline-Optimierungskriteriums aufgewiesen werden, wobei ein jeweiliger Schaltvektor der Anzahl N dieser Schaltvektoren einer jeweiligen Offline-Schalttabelle einer Anzahl N der Mehrzahl an Offline-Schalttabellen (29) entspricht und die Anzahl N der Mehrzahl an Offline-Schalttabellen (29) einen vollständigen Vektorraum aufspannt, den Gesamtschaltzustand anhand der ausgewählten Online-Schalttabelle zu ermitteln, und dabei das jeweilige vorgegebene Online-Auswahlkriterium und/oder das jeweilige vorgegebene Offline-Optimierungskriterium für die Bewertung des Gesamtschaltzustandes durch die Kostenfunktion mindestens aus folgender Liste gewählt ist: minimale Strombelastung eines jeweiligen Energiespeichers, gleichmäßige Entladung aller Energiespeicher des Multilevelkonverters, minimale Durchlassverluste, minimale Verluste in den Energiespeichern, minimale Gesamtverluste, wodurch erreicht ist, dass eine gleichlange Nutzung jeder Alternative im zeitlichen Mittel zu relativ ausgeglichener Strombelastung der einzelnen Energiespeicher führt.

4. System nach Anspruch 3, wobei das System dazu ausgelegt ist, ein erfindungsgemäßes Verfahren gemäß Anspruch 2 auszuführen.

## Claims

1. Method for a switching control of a multilevel converter, wherein the multilevel converter comprises a plurality of modules, wherein each module of the plurality of modules comprises at least one port on a first side and at least one port on a second side, at least two controllable switches and at least one energy storage device, wherein, in a first connection between the at least one port on the first side and the at least one port on the second side, the at least one energy storage device is arranged in series with a first of the at least two controllable switches, and in a second connection between the at least one port on the first side and the at least one port on the second side, a second of the at least two controllable switches is arranged, wherein each module of the plurality of modules comprises a respective module switching state (21) by means of the respective switch positions of the at least two controllable switches, wherein an overall switching state (14, 20) is formed from respective module switching states (21) of the plurality of modules by means of the switching control, wherein a current charging state of all energy storage devices of the multilevel converter is continuously provided to the switching controller, wherein the switching controller is divided into an offline part (2) and an online part (1), wherein, in the offline part (2),
• a plurality of alternative offline switching tables (29) is calculated by an optimiser in a continuous sequence, and
• a respective cost function (24) according to at least one respective predetermined offline optimisation criterion for an assessment of the overall switching state (20) is minimised for the calculation of a respective offline switching table of the plurality of alternative offline switching tables (29),
wherein in the online part (1),
• an online switching table is selected from the plurality of alternative offline switching tables (29) in a continuous sequence according to a predetermined online selection criterion,
• for each time step in real time, a respective voltage request is assigned a respective voltage level by a modulator (10),
• a respective overall switching state (14) is determined for the respective voltage level by a scheduler based on the selected online switching table and passed on to all modules,
wherein the online switching table (15) is selected from the plurality of alternative offline switching tables (29) in real time at each time step, wherein a number N of switching vectors corresponding to the number N of modules are calculated for a predetermined offline optimisation criterion, wherein, by means of a respective switching vector of the number N of switching vectors for a respective module of the number N of modules, optimal switch positions are shown according to the predetermined offline optimisation criterion, wherein a respective switching vector corresponds to the number N of these switching vectors of a respective offline switching table of a number N of the plurality of offline switching tables (29) and the number N of the plurality of offline switching tables (29) spans a full vector space, wherein the overall switching state is determined based on the selected online switching table, and thereby the respective predetermined online selection criterion and/or the respective predetermined offline optimisation criterion for the assessment of the overall switching state (14) is selected by means of the cost function at least from the following list: minimum current load of a respective energy storage device, equal discharge of all energy storage devices of the multilevel converter, minimum conduction losses, minimum losses in the energy storage device, minimum total losses, as a result of which the same usage of each alternative over an average time leads to a relatively balanced current load of the individual energy storage devices.

2. Method according to one of the preceding claims, **characterised in that**, after a selection of an online switching table from the plurality of online switching tables (15), the respective module switching states associated with the individual modules are respectively permuted to the next module of a module strand at each further time step.

3. System comprising a switching control for a multilevel converter and a multilevel converter, wherein the multilevel converter comprises a plurality of modules, wherein each module of the plurality of modules comprises at least one port on a first side and at least one port on a second side, at least two controllable switches and at least one energy storage device, wherein, in a first connection between the at least one port on the first side and the at least one port on the second side, the at least one energy storage device is arranged in series with a first of the at least two controllable switches, and in a second connection between the at least one port on the first side and the at least one port on the second side, a second of the at least two controllable switches is arranged, wherein each module of the plurality of modules comprises a respective module switching state (21) by means of the respective switch positions of the at least two controllable switches, wherein an overall switching state (14, 20) is formed from respective module switching states (21) of the plurality of modules by means of the switching control, wherein the system further comprises a modulator (10) and a schedule and a current charging state of all energy storage devices of the multilevel converter is to be continuously provided to the switching controller, wherein the switching controller divided into an offline part (2) and an online part (1) is configured to, in the offline part (2),
• calculate a plurality of alternative offline switching tables (29) by means of an optimiser in a continuous sequence, and
• a respective cost function (24) according to at least one respective predetermined offline optimisation criterion for an assessment of the overall switching state (20) is to be minimised for the calculation of a respective offline switching table of the plurality of alternative offline switching tables (29), and
in the online part (1),
• an online switching table is to be selected from the plurality of alternative offline switching tables (29) in a continuous sequence according to a predetermined online selection criterion,
• a respective voltage level is to be assigned for each time step in real time of a respective voltage request by a modulator (10), and
• a respective overall switching state (14) is to be determined based on the selected online switching table using a scheduler and is to be passed on to all modules,
wherein the switching control is additionally configured to select the online switching table (15) from the plurality of alternative offline switching tables (29) in real time at each time step, wherein a number N of switching vectors corresponding to the number N of modules are to be calculated for a predetermined offline optimisation criterion, wherein, by means of a respective switching vector of the number N of switching vectors for a respective module of the number N of modules, optimal switch positions are to be shown according to the predetermined offline optimisation criterion, wherein a respective switching vector corresponds to the number N of these switching vectors of a respective offline switching table of a number N of the plurality of offline switching tables (29) and the number N of the plurality of offline switching tables (29) spans a full vector space, the overall switching state is to be determined based on the selected online switching table, and thereby the respective predetermined online selection criterion and/or the respective predetermined offline optimisation criterion for the assessment of the overall switching state is selected by means of the cost function at least from the following list: minimum current load of a respective energy storage device, equal discharge of all energy storage devices of the multilevel converter, minimum conduction losses, minimum losses in the energy storage device, minimum total losses, as a result of which the same usage of each alternative over an average time leads to a relatively balanced current load of the individual energy storage devices.

4. System according to claim 3, wherein the system is designed to carry out an inventive method according to claim 2.

## Revendications

1. Procédé de commande de commutation d'un convertisseur multiniveaux, dans lequel le convertisseur multiniveau comprend une pluralité de modules, dans lequel chaque module de la pluralité de modules comprend au moins un port sur un premier côté et au moins un port sur un deuxième côté, au moins deux commutateurs commandables et au moins un dispositif de stockage d'énergie, dans lequel, dans un premier raccordement entre l'au moins un port sur le premier côté et l'au moins un port sur le deuxième côté, l'au moins un dispositif de stockage d'énergie est agencé en série avec un premier parmi les au moins deux commutateurs commandables, et dans un deuxième raccordement entre l'au moins un port sur le premier côté et l'au moins un port sur le deuxième côté, un deuxième parmi les au moins deux commutateurs commandables est agencé, dans lequel chaque module de la pluralité de modules comprend un état de commutation de module (21) respectif au moyen des positions de commutation respectives des au moins deux commutateurs commandables, dans lequel un état de commutation global (14, 20) est formé à partir des états de commutation de module (21) respectifs de la pluralité de modules au moyen de la commande de commutation, dans lequel un état de charge actuel de tous les dispositifs de stockage d'énergie du convertisseur multiniveau est fourni en continu au dispositif de commande de commutation, dans lequel le dispositif de commande de commutation est divisé en une partie hors ligne (2) et une partie en ligne (1), dans lequel, dans la partie hors ligne (2),
• une pluralité de tables de commutation hors ligne en variante (29) est calculée par un optimiseur dans une séquence continue, et
• une fonction de coût respective (24) selon au moins un critère d'optimisation hors ligne prédéterminé respectif pour une évaluation de l'état de commutation global (20) est réduite au minimum pour le calcul d'une table de commutation hors ligne respective de la pluralité de tables de commutation hors ligne en variante (29),
dans lequel dans la partie en ligne (1),
• une table de commutation en ligne est sélectionnée parmi la pluralité de tables de commutation hors ligne en variante (29) dans une séquence continue selon un critère de sélection en ligne prédéterminé,
• pour chaque pas temporel en temps réel, un niveau de tension respectif est attribué à une demande de tension respective par un modulateur (10),
• un état de commutation global (14) respectif est déterminé pour le niveau de tension respectif par un programmateur sur la base de la table de commutation en ligne sélectionnée et transmis à tous les modules,
dans lequel la table de commutation en ligne (15) est sélectionnée parmi la pluralité de tables de commutation hors ligne en variante (29) en temps réel à chaque pas temporel, dans lequel un nombre N de vecteurs de commutation correspondant au nombre N de modules sont calculés pour un critère d'optimisation hors ligne prédéterminé, dans lequel, au moyen d'un vecteur de commutation respectif du nombre N de vecteurs de commutation pour un module respectif du nombre N de modules, des positions de commutation optimales sont représentées selon le critère d'optimisation hors ligne prédéterminé, dans lequel un vecteur de commutation respectif correspond au nombre N de ces vecteurs de commutation d'une table de commutation hors ligne respective d'un nombre N de la pluralité de tables de commutation hors ligne (29) et le nombre N de la pluralité de tables de commutation hors ligne (29) couvre un espace vectoriel complet, dans lequel l'état de commutation global est déterminé sur la base de la table de commutation en ligne sélectionnée, et ainsi, le critère de sélection en ligne prédéterminé respectif et/ou le critère d'optimisation hors ligne prédéterminé respectif pour l'évaluation de l'état de commutation global (14) est sélectionné au moyen de la fonction de coût au moins à partir de la liste suivante : charge de courant minimale d'un dispositif de stockage d'énergie respectif, une décharge égale de tous les dispositifs de stockage d'énergie du convertisseur multiniveau, pertes de conduction minimales, pertes minimales dans le dispositif de stockage d'énergie, pertes totales minimales, en conséquence de quoi le même usage de chaque variante sur un temps moyen conduit à une charge de courant relativement équilibrée des dispositifs de stockage d'énergie individuels.

2. Procédé selon l'une quelconque des revendications précédentes, **caractérisé en ce que**, après une sélection d'une table de commutation en ligne parmi la pluralité de tables de commutation en ligne (15), les états de commutation de module respectifs associés aux modules individuels sont respectivement permutés vers le module suivant d'un toron de modules à chaque autre pas temporel.

3. Système comprenant une commande de commutation pour un convertisseur multiniveau et un convertisseur multiniveaux, dans lequel le convertisseur multiniveau comprend une pluralité de modules, dans lequel chaque module de la pluralité de modules comprend au moins un port sur un premier côté et au moins un port sur un deuxième côté, au moins deux commutateurs commandables et au moins un dispositif de stockage d'énergie, dans lequel, dans un premier raccordement entre l'au moins un port sur le premier côté et l'au moins un port sur le deuxième côté, l'au moins un dispositif de stockage d'énergie est agencé en série avec un premier parmi les au moins deux commutateurs commandables, et dans un deuxième raccordement entre l'au moins un port sur le premier côté et l'au moins un port sur le deuxième côté, un deuxième parmi les au moins deux commutateurs commandables est agencé, dans lequel chaque module de la pluralité de modules comprend un état de commutation de module (21) respectif au moyen des positions de commutation respectives des au moins deux commutateurs commandables, dans lequel un état de commutation global (14, 20) est formé à partir des états de commutation de module (21) respectifs de la pluralité de modules au moyen de la commande de commutation, dans lequel le système comprend en outre un modulateur (10) et un programme et un état de charge actuel de tous les dispositifs de stockage d'énergie du convertisseur multiniveau à fournir en continu au dispositif de commande de commutation, dans lequel le dispositif de commande de commutation divisé en une partie hors ligne (2) et une partie en ligne (1) est configuré pour, dans lequel, dans la partie hors ligne (2),
• calculer une pluralité de tables de commutation hors ligne en variante (29) au moyen d'un optimiseur dans une séquence continue, et
• une fonction de coût respective (24) selon au moins un critère d'optimisation hors ligne prédéterminé respectif pour une évaluation de l'état de commutation global (20) doit être réduite au minimum pour le calcul d'une table de commutation hors ligne respective de la pluralité de tables de commutation hors ligne en variante (29), et
dans la partie en ligne (1),
• une table de commutation en ligne doit être sélectionnée parmi la pluralité de tables de commutation hors ligne en variante (29) dans une séquence continue selon un critère de sélection en ligne prédéterminé,
• un niveau de tension respectif doit être attribué pour chaque pas temporel en temps réel d'une demande de tension respective par un modulateur (10), et
• un état de commutation global (14) respectif doit être déterminé sur la base de la table de commutation en ligne sélectionnée à l'aide d'un programmateur et doit être transmis à tous les modules, dans lequel la commande de commutation est configurée en outre pour sélectionner la table de commutation en ligne (15) parmi la pluralité de tables de commutation hors ligne en variante (29) en temps réel à chaque pas temporel, dans lequel un nombre N de vecteurs de commutation correspondant au nombre N de modules doivent être calculés pour un critère d'optimisation hors ligne prédéterminé, dans lequel, au moyen d'un vecteur de commutation respectif du nombre N de vecteurs de commutation pour un module respectif du nombre N de modules, des positions de commutation optimales doivent être représentées selon le critère d'optimisation hors ligne prédéterminé, dans lequel un vecteur de commutation respectif correspond au nombre N de ces vecteurs de commutation d'une table de commutation hors ligne respective d'un nombre N de la pluralité de tables de commutation hors ligne (29) et le nombre N de la pluralité de tables de commutation hors ligne (29) couvre un espace vectoriel complet, l'état de commutation global doit être déterminé sur la base de la table de commutation en ligne sélectionnée, et ainsi, le critère de sélection en ligne prédéterminé respectif et/ou le critère d'optimisation hors ligne prédéterminé respectif pour l'évaluation de l'état de commutation global est sélectionné au moyen de la fonction de coût au moins à partir de la liste suivante : charge de courant minimale d'un dispositif de stockage d'énergie respectif, une décharge égale de tous les dispositifs de stockage d'énergie du convertisseur multiniveau, pertes de conduction minimales, pertes minimales dans le dispositif de stockage d'énergie, pertes totales minimales, en conséquence de quoi le même usage de chaque variante sur un temps moyen conduit à une charge de courant relativement équilibrée des dispositifs de stockage d'énergie individuels.

4. Système selon la revendication 3, dans lequel le système est conçu pour effectuer un procédé selon l'invention selon la revendication 2.
